(19) Europäisches Patentamt
European Patent Office
Office européen des brevets

(11) **EP 3 237 929 B1**

(12) **FASCICULE DE BREVET EUROPEEN**

(45) Date de publication et mention
de la délivrance du brevet:
**13.02.2019 Bulletin 2019/07**

(51) Int Cl.:
***G01T 1/20*** *(2006.01)*

(21) Numéro de dépôt: **15825616.4**

(86) Numéro de dépôt international:
**PCT/FR2015/053629**

(22) Date de dépôt: **18.12.2015**

(87) Numéro de publication internationale:
**WO 2016/102845 (30.06.2016 Gazette 2016/26)**

(54) **SCINTILLATEUR ORGANIQUE SOLIDE STRUCTURÉ CHARGÉ AU BISMUTH**

MIT BISMUT BELADENER STRUKTURIERTER FESTER ORGANISCHER SZINTILLATOR

BISMUTH-CHARGED STRUCTURED SOLID ORGANIC SCINTILLATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463154**

(43) Date de publication de la demande:
**01.11.2017 Bulletin 2017/44**

(73) Titulaire: **Commissariat à l'énergie atomique et aux énergies alternatives
75015 Paris (FR)**

(72) Inventeurs:
• **DARBON, Stéphane
75013 Paris (FR)**

• **HAMEL, Matthieu
50100 Cherbourg (FR)**
• **ROUSSEAU, Adrien
91450 Etiolles (FR)**
• **CAILLAUD, Tony
91290 La Norville (FR)**

(74) Mandataire: **Santarelli
49, avenue des Champs-Elysées
75008 Paris (FR)**

(56) Documents cités:
**WO-A1-2014/135640      WO-A2-03/081279
FR-A1- 2 555 321      US-A1- 2011 315 885**

**Description**

L'invention concerne un scintillateur plastique (c'est-à-dire organique) chargé au bismuth et structuré, pour l'imagerie utilisant des rayonnements X ou gamma ou des particules chargées. Elle s'applique ainsi à l'imagerie de rayonnements ionisants X, gamma, beta, protons, électrons, ions.

Elle trouve des usages dans de nombreux domaines comme les contrôles non destructifs, l'imagerie médicale (radiographie, gammagraphie, la protonographie, la tomographie), la sécurité (contrôle radiographique de colis par exemple). L'invention peut également être utilisée en spectrométrie pour caractériser l'énergie des rayonnements ionisants issus d'une source de rayonnement.

Le scintillateur est dit structuré en ce sens que le matériau plastique qu'il comporte est distribué au sein de capillaires.

**Art antérieur**

Dans le domaine de l'imagerie, le rôle du scintillateur est de convertir un rayonnement ionisant en rayonnement lumineux visible. Pour réaliser un dispositif d'imagerie de bonne qualité, il faut optimiser deux paramètres antagonistes :

- Le seuil de détection qui impose de maximiser l'épaisseur de scintillateur pour augmenter la probabilité d'interaction du rayonnement avec le scintillateur et donc le rendement lumineux de conversion,
- La résolution spatiale qui, quant à elle, demande de minimiser l'épaisseur de scintillateur pour limiter la diffusion de la lumière visible car la luminescence est un phénomène isotrope.

Un autre paramètre est la vitesse de déclin de scintillation ; plus il est faible, mieux il permet de suivre des phénomènes rapides.

En pratique le matériau constitutif d'un scintillateur doit être transparent, et émettre autant que possible dans le domaine visible, de préférence au-delà de 500 nanomètres (en fait, ce qui importe, c'est que le scintillateur puisse émettre un rayonnement compatible avec un détecteur avec lequel il peut être amené à coopérer).

On connait deux grandes familles de scintillateurs, selon que leur matière constitutive est inorganique ou organique.

Dans le domaine des rayonnements ionisants, les scintillateurs du commerce sont en majorité des monoblocs massiques de cristaux inorganiques comme par exemple le germanate de bismuth (BGO) ou le grenat d'yttrium et aluminium dopé au cérium (YAG:Ce). Grâce à leur densité élevée, ces scintillateurs conservent une épaisseur relativement modérée tout en garantissant une probabilité d'interaction élevée.

Lorsqu'on l'on recherche à augmenter la sensibilité, il faut recourir à des épaisseurs de scintillateur importantes. Il est alors nécessaire de recourir à des techniques de segmentation pour conserver une résolution spatiale satisfaisante (on dit que le scintillateur est segmenté, ou structuré). Le scintillateur est alors constitué d'une multitude de fibres, de section par exemple parallélépipédique, dont la longueur est très supérieure aux autres dimensions. Ces fibres sont collées les unes aux autres et optiquement isolées, orientées de telle manière que le rayonnement incident arrive parallèlement à la plus grande dimension des aiguilles. Dans ce cas, la dégradation de résolution spatiale est limitée car la lumière produite dans chaque fibre ne peut pas se propager dans les fibres adjacentes. Typiquement, les fibres ont une longueur de l'ordre du centimètre et les autres dimensions sont d'au plus quelques centaines de micromètres.

Toutefois, cette technique de segmentation est extrêmement coûteuse et ne peut s'appliquer qu'à certains matériaux dont on maitrise la croissance cristalline.

En outre, les scintillateurs inorganiques présentent, du fait de leur structure cristalline, un temps de réponse trop long pour certaines applications. En effet, le temps de réponse de ces matériaux est dans la grande majorité des cas très supérieur à 10 ns, ce qui est incompatible avec certains usages notamment dans les diagnostics d'imagerie X sur Laser rapides.

En ce qui concerne les scintillateurs organiques, ils sont utilisés depuis longtemps pour l'imagerie des rayonnements ionisants. On peut notamment se référer au document US - 4 495 084, noté [13] à la fin de la présente description (ou son équivalent FR - 2 511 387), ou au document EP - 0 913 448 [14] ou au document WO - 2014/135640 [15]. Dans la mesure où l'interception des rayonnements induit souvent une scintillation à des longueurs d'onde faibles (en dehors du domaine du visible), il est connu d'intégrer des molécules, appelées fluorophores, ayant pour effet de convertir le rayonnement résultant de la scintillation en rayonnement de plus grande longueur d'onde, situé dans le domaine visible.

Toutefois, ces scintillateurs organiques présentent avec les rayonnements ionisants une probabilité d'interaction plus faible que les scintillateurs inorganiques, du fait du numéro atomique Z faible des composants organiques. Pour surmonter cette difficulté, deux grandes techniques sont utilisées :

- Le remplissage d'une matrice de capillaires par le matériau scintillateur ayant pour effet de réduire la dispersion lumineuse et d'autoriser le recours à des épaisseurs importantes de scintillateur, ou

- L'ajout d'un matériau à Z élevé dans le matériau scintillateur pour en augmenter la densité.

Parmi les scintillateurs à capillaires, on peut citer, par exemple, le remplissage d'une matrice de capillaires en verre avec un matériau scintillateur liquide tel que décrit dans le document WO - 03/081279 [2] ; il s'agit par exemple de capillaires dont le diamètre interne est inférieur ou égal à 50 micromètres, par exemple égal à 20 micromètres ; quant au liquide scintillateur, il contient une fraction importante de deutérium. Toutefois, son exploitation est fastidieuse et compliquée car il faut garantir le confinement du liquide, notamment sous vide, ce qui implique l'utilisation d'un matériau de confinement transparent pour permettre à la lumière de sortir, ce qui présente le double inconvénient d'augmenter le nombre d'interfaces optiques (et par conséquent d'accroître les pertes en transmission, ce qui est dommageable au signal à détecter) et d'interdire toute dilatation thermique du scintillateur liquide (ce qui augmente la pression interne dans les capillaires et peut mener à la destruction de la matrice).

On peut aussi citer le remplissage d'une matrice de capillaires en verre avec un monomère et un matériau absorbant les neutrons suivi d'un processus de polymérisation ; une première ébauche a été proposée en 1985 [3] ; plus récemment, il a été proposé dans le document US - 7 372 041 [10] de remplir des capillaires en matière plastique ou en verre de diamètre compris entre 10 et 200 micromètres avec un polymère organique tel que du polystyrène ou du polyvinyltoluène dopé à quelques pourcents avec Li, B, Sm, Cd, Eu, Gd ou Dy, contenant éventuellement en outre des fluorophores. Mais cette solution se limite à la détection des neutrons et ne s'applique pas à l'imagerie de rayonnements ionisants.

Il est à noter que la formation d'un scintillateur organique structuré, comportant un réseau de capillaires de faible diamètre implique en pratique de pouvoir former un mélange homogène dans un moule dans lequel on forme une dépression en sorte de forcer par aspiration la pénétration du mélange dans les capillaires ; il s'agit donc de moules plus complexes que ceux dans lesquels on forme des scintillateurs monolithiques, qui peuvent être utilisés à la pression atmosphérique. On comprend que cette pénétration est d'autant plus facile que la viscosité du mélange et que le mélange est homogène, étant précisé qu'il est intéressant de pouvoir faire ce mélange et de forcer sa pénétration dans les capillaires à la température ambiante, et non dans une enceinte à température contrôlée au-dessus de cette température ambiante. On provoque ensuite la polymérisation du mélange, ce qui se fait en pratique par montée en température ; il va de soi que les opérations de mélange et de pénétration forcée du mélange ne doivent pas se faire à une température où la polymérisation du mélange peut se réaliser.

L'autre option consistant à ajouter un matériau à Z élevé, tel que du plomb, dans un scintillateur organique est connu depuis les années 50 [5 et 7]. Cela améliore l'interaction avec le rayonnement et donc la sensibilité du scintillateur. Toutefois, les matériaux à Z élevé ne peuvent être incorporés qu'à des pourcentages faibles et l'homogénéité du mélange est très difficile à obtenir en raison des phénomènes de précipitation observés avec les molécules contenant les éléments lourds. Plus récemment, certains auteurs ([6] et [1]) ont montré que, en utilisant un composé organométallique dénommé diméthacrylate de plomb, en tant qu'agent de réticulation de vinyltoluène, et de l'acide méthacrylique, il était possible d'atteindre un fort taux d'intégration du plomb allant jusqu'à 12.3% (avec du méthacrylate de 2-hydroxyéthyle au lieu de l'acide méthacrylique, on pouvait même obtenir 29%). Un aspect important est que l'atome de plomb est directement greffé sur la chaine de polymère, ce qui garantit le maintien d'une répartition homogène de celui-ci dès que commence la réticulation et évite une accumulation par précipitation [1]. Ces auteurs ajoutent des fluorophores dans le matériau organique scintillant afin de décaler l'émission lumineuse vers des longueurs d'ondes adaptées au capteur d'image.

## Problème technique et objet de l'invention

On comprend qu'il serait intéressant d'arriver à combiner les avantages de ces deux techniques au sein d'un scintillateur organique, c'est-à-dire combiner la densité élevée des scintillateurs organiques à Z élevé à la possibilité d'avoir des épaisseurs élevées sans nuire à la résolution spatiale, le tout sans avoir à mettre en oeuvre d'étapes complexes et coûteuses de fabrication.

Il a pourtant été constaté jusqu'à présent que les deux techniques précitées semblaient incompatibles, compte tenu de la difficulté qu'il y a à obtenir, à la température ambiante, des mélanges homogènes avec des composés lourds tels que des composés au plomb, qui tendent à précipiter au fond du moule avant qu'on ait pu déclencher la réticulation ; en d'autres termes on n'arrive pas à forcer la pénétration dans les capillaires du mélange tout en maintenant les molécules chargées en plomb dans une distribution régulière dans ce mélange.

En particulier, les tentatives faites à ce jour d'obtenir un scintillateur organique formé d'un réseau de capillaires rempli d'un matériau chargé d'un élément à Z élevé se sont révélées infructueuses, notamment en raison de la faible solubilité du diméylacrylate de plomb dans les monomères propices à la préparation d'un scintillateur à capillaires, ce qui a pour inconvénient d'aboutir à une précipitation en partie basse du moule et même à un bouchage des capillaires.

Or, pour optimiser l'effet favorable d'un Z élevé, il est apparu intéressant d'arriver à intégrer des atomes de bismuth, légèrement plus lourds que le plomb (Z=83, au lieu de Z=82).

L'invention a pour objet un scintillateur organique structuré au bismuth, dont la préparation puisse se faire à la température ambiante, formé de capillaires remplis de manière homogène d'un matériau polymère comportant une fraction importante de bismuth, tout en étant transparent et présentant avantageusement un temps de déclin de scintillation suffisamment faible pour permettre l'imagerie en rayonnement ionisant (typiquement au plus 20 ns).

L'invention propose à cet effet un scintillateur pour l'imagerie utilisant des rayonnements X ou Gamma ou des particules chargées, comportant un réseau de capillaires en verre de diamètre interne au plus égal à 500 micromètres, ces capillaires étant remplis d'un matériau polymère formé d'au moins (i) un monomère choisi dans le groupe constitué par le vinyltoluène, le styrène et le vinylxylène et leurs isomères, (ii) d'un agent de réticulation constitué par un diméthacrylate possédant une chaine centrale comportant de 1 à 12 atomes de carbone ou par du divinylbenzène, et (iii) de triphénylbismuth, l'agent de réticulation étant présent dans une proportion massique de 10% à 60% de son mélange avec le monomère et le triphénylbismuth étant présent à au moins 5% en poids, l'agent de réticulation étant présent dans une proportion de 0.75 à 1.25 fois la teneur massique du triphénylbismuth.

On peut noter qu'il s'agit d'un scintillateur organique solide, fortement chargé au bismuth et incorporé dans des capillaires en verre, formé à partir d'un mélange qui peut être préparé et incorporé à l'intérieur de capillaires à la température ambiante, tout en garantissant une bonne répartition du bismuth dans la matrice réticulée.

Une manière efficace d'amener du bismuth au sein du matériau organique a été d'utiliser du triphénylbismuth.

Il mérite d'être signalé qu'il était déjà connu en soi de réaliser des scintillateurs organiques à partir de vinyltoluène ou de styrène depuis les années 1980 (voir le document [13]), en combinaison avec, notamment, des méthacrylates d'alkyle de 1 à 4 atomes de carbone ; mais il n'était pas envisagé que de tels polymères soient chargés en un élément lourd comme le bismuth et puissent être intégrés à l'intérieur de capillaires.

On connaissait également, d'après le document EP - 0 913 448 [14], des composés contenant divers fluorophores dans une matrice polymère d'un monomère aromatique de type styrène ou vinyltoluène et d'un agent de type divinylbenzène ; s'il était mentionné que, parmi une pluralité de formes possibles, le mélange pouvait, avant polymérisation, être conformé en tubes capillaires, il ne s'agissait que d'une simple affirmation, sans la moindre justification et sans la moindre prise en compte des difficultés inhérentes à la mise en oeuvre de tels capillaires ; ce document mentionnait la mise en oeuvre d'ions métalliques (du type lanthanides), au sein de chélates. En tout état de cause, ce document n'envisage en aucune manière d'intégrer du bismuth dans le matériau organique.

Plus récemment on connaissait, notamment d'après le document [1] précité, des polymères formés à base de vinyltoluène, de styrène, de vinylxylène en combinaison avec de l'acide méthacrylique et un agent de réticulation constitué par du diméthacrylate de plomb ; mais il n'était pas envisagé que de tels polymères puissent être intégrés à l'intérieur de capillaires. En fait, les mélanges au plomb proposés par ce document sont apparus ne pas être compatibles avec une intégration au sein d'un réseau de capillaires ; en effet, la présence de l'acide méthacrylique est apparu avoir un effet très agressif sur l'installation comportant le moule devant recevoir le mélange et les capillaires, notamment sur les joints de celle-ci. Quant au mélange de méthacrylate de 2-hydroxyéthyle et de diméthacrylate de plomb également mentionné dans ce document, bien qu'il ne contienne pas l'acide méthacrylique, il est apparu ne pas convenir en raison notamment des phénomènes de précipitation observés avec ce diméthacrylate de plomb à la température ambiante.

En tout état de cause, ce document ne contenait aucun enseignement précis permettant d'extrapoler au bismuth ce qui était indiqué à propos du plomb ; au contraire, les problèmes posés par la molécule porteuse du plomb tendait à convaincre la personne du métier que des problèmes de même nature se poseraient avec le bismuth.

Encore plus récemment, on connaissait d'après le document [15], des matériaux scintillateurs plastiques formés à partir de styrène, de vinyltoluène ou de vinylxylène (ou de leurs isomères) en combinaison avec un agent de réticulation tel que du divinylbenzène ou, pour favoriser une réticulation rapide et complète, du diméthacrylate de 1,4-butanediyle (préconisé en raison de ce qu'il a un faible coefficient de retrait), qui est un diméthacrylate ayant une chaine centrale à 4 atomes de carbone, et des fluorophores. Toutefois, ce document n'envisageait pas l'intégration de composés organométalliques à base de bismuth (il envisageait tout au plus de doper le polymère avec du bore) ni, a fortiori, les difficultés qu'il pourrait y avoir à mettre en oeuvre le matériau polymère au sein d'un réseau de capillaires. Il mérite d'être noté que ce document se place dans un contexte différent de celui de l'invention, puisqu'il vise notamment à permettre la réalisation de scintillateurs de grands volumes (une structuration au moyen de capillaires ne semble pas alors utile) en vue de pouvoir discriminer les neutrons par rapport aux rayons gamma, grâce à la mise en oeuvre du bore qui, avec son faible Z, est un choix contraire à celui du bismuth.

Contrairement à ce qu'on pouvait supposer a priori à propos du choix d'un diméthacrylate ayant une chaine centrale comprenant entre 1 et 12 atomes de carbone, celui-ci est apparu ne pas poser de problème de solubilité dans le mélange (contrairement à ce qu'on a pu constater avec d'autres diméthacrylates) ; en fait, non seulement il ne pose pas de problème de solubilité en soi mais, en outre, il semble qu'il ait un effet favorable à la solubilisation du triphénylbismuth dans le mélange, d'où l'obtention, avant réticulation, d'une répartition régulière du bismuth dans le mélange à l'intérieur des capillaires, même lorsque leur diamètre est au plus égal à 100 ou même 50 micromètres, voire au plus égal à 20 micromètres (ou même 10 micromètres). Après réticulation, la matrice du scintillateur comporte à l'intérieur des capillaires un polymère où le bismuth reste selon une répartition sensiblement régulière, bien que cet élément ne soit pas fixé, sans dégradation significative au cours du temps.

De manière avantageuse, l'agent de réticulation est du divinylbenzène.

Lorsqu'on choisit un diméthacrylate possédant une chaine centrale comprenant entre 1 et 12 atomes de carbone, il est avantageux de mettre en oeuvre du diméthacrylate de 1,4-butanediyle. En variante, il peut s'agir de diméthacrylate de 1,2-éthylène glycidyle, ou de diméthacrylate de 1,6-hexanediyle, notamment.

De manière avantageuse, le matériau comporte le monomère et l'agent de réticulation dans des quantités massiques dont le rapport est compris entre 2 et 4. De préférence, ce rapport est compris entre 2.9 et 3.1.

De manière également avantageuse, l'agent de réticulation et le triphénylbismuth sont dans des quantités massiques dont le rapport est compris entre 0.9 et 1.1.

De manière avantageuse, le matériau du scintillateur comporte l'élément Bi à au moins 8% en poids (voire 10% en poids), ce qui apporte un effet de Z élevé significatif.

De manière avantageuse, le matériau comporte en outre au moins un fluorophore capable de générer de la lumière dans le spectre visible ; il peut s'agir de fluorophores primaire, secondaire ou tertiaire selon la nomenclature habituelle.

Le principe d'incorporer des fluorophores dans un scintillateur organique est connu en soi, notamment d'après le document [1] dans lequel il est proposé d'incorporer des éléments chimiques de Z élevé en combinaison avec des composés adaptés à faire remonter la longueur d'émission au-dessus de 550 nm, en une ou plusieurs réactions, c'est-à-dire qu'il peut y avoir un premier fluorophore (fluorophore primaire) qui réagit au rayonnement UV en émettant des photons dans le rouge, et un second fluorophore (fluorophore secondaire) qui réagit à ces photons en émettant une lumière visible de plus haute longueur d'onde, voire un troisième fluorophore (fluorophore tertiaire) qui réagit à cette lumière visible en émettant au-dessus du seuil précité. Des résultats intéressants ont été obtenus avec un composé 1,8-naphtalimide et du bis-*N*-(2,5-di-t-butylphényl)-3,4,9,10-pérylènetétracarbodiimide. On peut également citer les documents [14] et [15] ; toutefois, il n'y est pas envisagé d'incorporer un tel mélange, comprenant de tels fluorophores, dans des capillaires.

D'un point de vue structurel, le scintillateur de l'invention a avantageusement une face destinée à être mise en regard d'un rayonnement X ou Gamma ou de particules chargées qui est munie d'un revêtement réfléchissant adapté à renvoyer de la lumière vers l'autre face.

Selon une autre option avantageuse, une face destinée à être mise en regard d'un rayonnement X ou Gamma ou de particules chargées est munie d'un revêtement diffusant adapté à renvoyer de la lumière vers l'autre face.

De manière avantageuse, les capillaires sont revêtus intérieurement d'un matériau réfléchissant.

Le diamètre interne des capillaires est avantageusement au plus égal à 100 voire, 50 micromètres, ou même 20 micromètres, voire 10 micromètres, ce qui permet d'obtenir une très bonne résolution spatiale.

## Description de l'invention

Des objets de l'invention ressortent de la description qui suit, donnée à titre d'exemple illustratif non limitatif en regard du dessin annexé sur lequel :

- La figure 1 est un graphique représentant le déclin du signal (en unités artibraires) émis en fonction du temps d'un scintillateur conforme à l'invention,
- La figure 2a est un schéma d'un capillaire nu
- La figure 2b est un schéma d'un capillaire muni d'un revêtement réfléchissant en face arrière
- La figure 2c est un schéma d'un capillaire dont la surface interne comporte un revêtement réfléchissant
- La figure 2d est un schéma d'un capillaire combinant un revêtement réfléchissant en paroi interne et un revêtement réfléchissant ou diffusant en face arrière,
- Les figures 3a à 3c sont des figures d'éclairement correspondant aux capillaires des figures 2a à 2c,
- La figure 3d est une figure d'éclairement correspondant au cas d'un capillaire conforme à la figure 2d avec un revêtement réfléchissant, et
- La figure 3e est une figure d'éclairement correspondant au cas d'un capillaire conforme à la figure 2d avec un revêtement diffusant.

De manière générale, l'invention consiste à réaliser des scintillateurs organiques structurés à partir d'un mélange comportant au moins un monomère choisi parmi les monomères suivants (y compris leurs isomères) :

- Vinyltoluène
- Styrène
- Vinylxylène

auquel on ajoute au moins un agent de réticulation choisi dans le groupe constitué du divinylbenzène et des diméthacrylates possédant une chaine centrale comprenant de 1 à 12 atomes de carbone (tels que le diméthacrylate de 1,4-butanediyle), en respectant la condition que les proportions d'agent de réticulation et de monomère sont comprises entre 10%-60% et 90%-40%, par rapport au mélange de monomères et de composants. Cela signifie qu'il peut y avoir de 10% à 60% d'agent de réticulation, par rapport au mélange de monomères et d'agent de réticulation.

Après ajout d'une proportion appropriée de triphénylbismuth (en pratique au moins égale à 5% en poids du mélange de monomère et d'agent de réticulation et de triphénylbismuth), on obtient un scintillateur organique combinant les avantages d'un scintillateur à capillaires et d'un scintillateur à Z élevé : en effet, ce scintillateur combine une bonne résolution spatiale et une bonne sensibilité, sans impliquer d'épaisseur importante, et sans risque de dégradation de la transparence au cours du temps.

La teneur en agent de réticulation est avantageusement choisie en fonction de la teneur en triphénylbismuth, en pratique entre 0.75 et 1.25 fois cette teneur, de préférence entre 0.9 et 1.1 fois cette teneur, ce qui revient à dire que, de manière préférée, la teneur en agent de réticulation est au moins approximativement égale à la teneur en triphénylbismuth.

Un scintillateur du type précité a une émission lumineuse intrinsèque dans l'UV lorsqu'il est soumis à un rayonnement ionisant. C'est pourquoi une option de l'invention consiste à incorporer des fluorophores dans le matériau organique du scintillateur afin de convertir l'émission préférentielle dans l'UV de celui-ci vers le rouge. Cela permet d'adapter le scintillateur aux capteurs d'image tel que les CCD par exemple.

Les fluorophores utilisés dans l'invention sont de préférence des dérivés du 1,8-naphtalimide.

Sans vouloir s'y limiter, il mérite d'être noté que des résultats particulièrement intéressants ont été obtenus en utilisant deux fluorophores primaires, le 2,5-diphényloxazole ou le biphényle.

De manière tout particulièrement avantageuse, l'invention met en oeuvre un autre fluorophore qui est soit un composé de structure proche des naphtalimides (bis-*N*-(2,5-di-t-butylphényl)-3,4,9,10-pérylènetétracarbodiimide), soit du Nile Red.

D'autres fluorophores peuvent être envisagés du moment que les transferts énergétiques sont réalisés depuis le proche UV jusque dans le rouge avec une bonne efficacité quantique, déterminée par le recouvrement des spectres successifs d'émission/absorption.

Il mérite d'être noté que l'ensemble des fluorophores proposés ci-dessus permet de conserver un temps de décroissance de l'ordre de la dizaine de nanosecondes.

Ainsi, l'invention permet de développer des scintillateurs plastiques dont la longueur d'onde d'émission est facilement ajustable. En d'autres termes, on peut, selon l'invention, ajouter jusqu'à trois voire quatre fluorophores différents qui convertissent l'énergie du rayonnement incident depuis l'UV jusqu'au rouge.

Pour ce faire on peut choisir :

- Un premier fluorophore (fluorophore primaire) soluble dans les solvants apolaires à des concentrations comprises entre 0,5 et 15 % massique, de préférence entre 3% et 15% massique, possédant un maximum de longueur d'onde d'absorption proche de 300 nm et émettant la lumière aux alentours de 360 nm, possédant un rendement quantique de fluorescence supérieur à 20 % et une constante de décroissance de luminescence inférieure à 20 ns ;
- Un deuxième fluorophore (fluorophore secondaire) soluble dans les solvants apolaires à des concentrations comprises entre 0,01 et 4 % massique, possédant un maximum de longueur d'onde d'absorption proche de 360 nm et émettant la lumière aux alentours de 420 nm, possédant un rendement quantique de fluorescence supérieur à 40 % et une constante de décroissance de luminescence inférieure à 20 ns ;
- Un troisième fluorophore (fluorophore tertiaire) soluble dans les solvants apolaires à des concentrations comprises entre 0,01 et 1 % massique, possédant un maximum de longueur d'onde d'absorption proche de 420 nm et émettant la lumière aux alentours de 510 nm, possédant un rendement quantique de fluorescence supérieur à 40 % et une constante de décroissance de luminescence inférieure à 20 ns ;
- Un quatrième fluorophore (fluorophore quaternaire) soluble dans les solvants apolaires à des concentrations comprises entre 0,01 et 1 % massique, possédant un maximum de longueur d'onde d'absorption proche de 510 nm et émettant la lumière aux alentours de 590 nm, possédant un rendement quantique de fluorescence supérieur à 40 % et une constante de décroissance de luminescence inférieure à 20 ns.

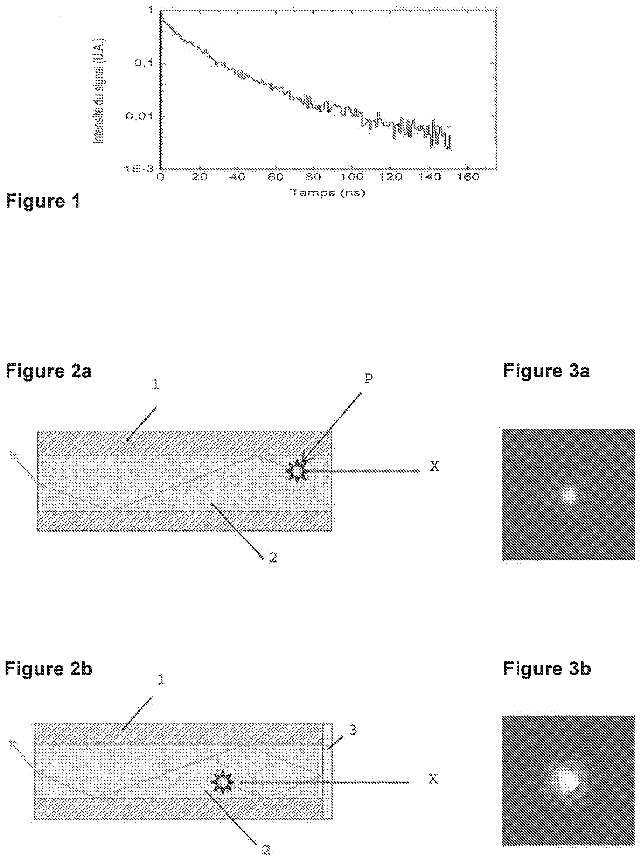

La figure 1 représente une mesure du spectre résolu en temps pour une excitation du scintillateur à 330nm, exprimant une mesure du temps de décroissance du scintillateur. Le profil de décroissance temporelle à la longueur d'onde d'intérêt est mesuré puis approximé par une exponentielle décroissante, simple ou double. Le temps de déclin est alors défini comme la constante de temps de la première exponentielle.

La matrice de capillaires utilisée dans l'invention est en verre, en pratique selon une disposition en quinconce, avec d'éventuelles cales entre les capillaires. L'utilisation de capillaires en matière plastique ne peut être envisagée car la température de transition vitreuse est pour l'immense majorité des cas inférieure à 100°C ou très légèrement supérieure (à l'exception notable de la famille des polycarbonates). La polymérisation des scintillateurs chargés en métaux lourds passant par des cycles thermiques dépassant les 100°C, l'intégrité de l'ensemble ne peut alors pas être assurée.

L'indice optique du scintillateur organique chargé en métaux lourds est voisin de 1,57. L'indice du verre constituant la gaine doit donc être inférieur à cette valeur pour garantir le guidage selon les lois de Snell-Descartes. La scintillation étant intrinsèquement isotrope, le guide d'onde ainsi constitué doit avoir une ouverture numérique (dont la formule est rappelée ci-dessous) la plus élevée possible afin de réduire les pertes de lumière non guidée. Pour cela, l'indice du verre constituant la gaine doit avoir un indice bien inférieur à l'indice du plastique scintillant.

$$ON = \sqrt{n_c^2 - n_g^2} \ avec \begin{cases} n_c \ l'indice \ du \ cœur \\ n_g \ l'indice \ de \ la \ gaine \end{cases}$$

La figure 2a représente un capillaire comportant un tube en verre 1 (l'indice $\underline{n}$ est sensiblement égal à 1.47) et un matériau polymérisé 2 (dans le cas considéré, son indice $\underline{n}$ a été 1.57) ; un rayonnement X venant de la droite y est intercepté au sein du matériau, en un emplacement désigné par la flèche P, en sorte de générer un photon circulant vers la gauche, en étant réfléchi sur la surface interne du capillaire.

Selon une caractéristique avantageuse de l'invention, on ajoute une couche réfléchissante 3 sur la face du scintillateur qui, étant perpendiculaire à la matrice de capillaires, est en vue directe du rayonnement ionisant ; cela permet de récupérer la lumière se propageant dans le sens inverse au faisceau X (voir la figure 2b, à comparer à la configuration de base de la figure 2a).

Selon une autre caractéristique avantageuse de l'invention, on ajoute entre les capillaires ou le long de leur surface interne un matériau (non représenté) absorbant la lumière visible afin de réduire le cross-talk entre guides d'onde. La scintillation étant isotrope alors que le guide d'onde constitué par le cœur scintillant et la gaine en verre a une acceptance angulaire limitée, l'ajout d'absorbant réduit également la lumière parasite non guidée : la résolution spatiale s'en trouve alors améliorée.

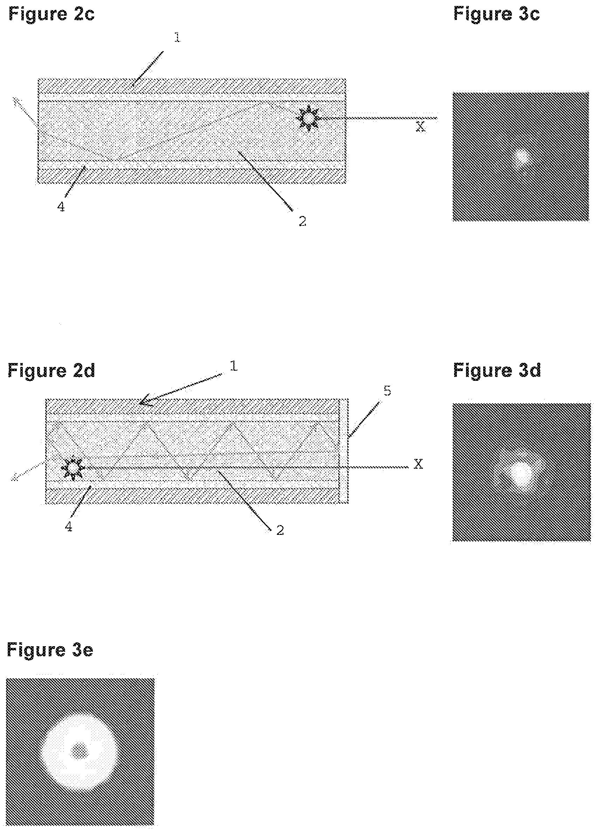

Selon encore une autre variante, on forme un dépôt métallique réfléchissant 4 sur les parois internes des capillaires en verre (voir la figure 2c). En effet, alors que les précédentes versions perdent plus de 50% du signal lumineux du fait de l'acceptance angulaire limitée du guide d'onde à saut d'indice, l'ajout du dépôt réfléchissant permet de guider la lumière générée par le scintillateur avec un minimum de perte. Toutefois, du fait de l'interface scintillateur/air, une partie de la lumière guidée reste piégée à l'intérieur du guide d'onde. Afin de récupérer cette lumière, les inventeurs proposent, en outre, l'ajout d'un miroir 3 ou d'un revêtement diffusant 5 en face arrière de la matrice de capillaires (voir la figure 2d).

L'intérêt des ajouts précités ressort de la comparaison des figures 3a à 3e :

- la figure 3a représente la carte d'éclairement obtenue pour un guide d'onde formé d'un capillaire nu, pour une source ponctuelle isotrope de 1W en milieu de guide, avec une échelle de couleurs linéaire de 0 à 7.7 $10^6$ W/m$^2$ (la perte mesurée a été de 89%),
- la figure 3b représente la carte d'éclairement obtenue dans les mêmes conditions, dans le cas d'un capillaire muni d'un miroir en face arrière (figure 2b) ; la perte mesurée a été de 76%,
- la figure 3c représente la carte d'éclairement obtenue dans les mêmes conditions, dans le cas d'un capillaire dont la surface interne est rendue réfléchissante (figure 2c) ; la perte mesurée a été de 88%,
- la figure 3d représente la carte d'éclairement obtenue dans les mêmes conditions, dans le cas d'un capillaire combinant une surface interne réfléchissante et un miroir en face arrière (figure 2d) ; la perte mesurée a été de 76% ; et
- la figure 3e représente la carte d'éclairement obtenue dans les mêmes conditions, dans le cas d'un capillaire combinant une surface interne réfléchissante et un revêtement diffusant en face arrière (figure 2d) ; la perte mesurée a été de 14%.

Il mérite d'être noté que, par rapport au cas d'un capillaire nu, la présence d'un revêtement réfléchissant à l'intérieur du capillaire n'a pratiquement aucun effet (il semble que, dans le cas considéré, la surface interne du capillaire ait déjà un effet réfléchissant significatif). La présence d'un miroir en face arrière a un effet positif ; par contre, de manière surprenante, on réduit très significativement les pertes en disposant un matériau diffusant en face arrière.

A titre d'exemple, un scintillateur organique est réalisé à partir d'un mélange poly(styrène)-poly(diméthacrylate de 1,4-butanediyle) mis en présence d'une proportion déterminée de triphénylbismuth ; le verre utilisé pour les capillaires en verre (référencé 8250 chez le fabricant Schott) possède un indice optique de 1,57. L'ouverture numérique du bundle de fibres scintillantes créé a alors une ouverture numérique de 0,52 correspondant à un angle de 31,6°. Les capillaires en verre ont un diamètre intérieur de moins de 100 voire 50 $\mu$m, voire au plus égal à 20 ou même 10 $\mu$m. Afin d'éviter une trop grande inhomogénéité d'éclairement du scintillateur, un contrôle strict de l'épaisseur de verre (différence entre diamètre externe/interne) et de l'indice du verre a été réalisé. En effet une grande dispersion de cette épaisseur entraine des fluctuations significatives de densité et d'indice entre capillaires.

Des fluorophores sont incorporés afin de maximiser l'intensité de fluorescence sous rayonnement X. Les meilleurs rendements de scintillation ont été obtenus pour des pourcentages massiques de bismuth voisins de 8 à 10%.

Un exemple particulier de composition est donné ci-dessus, à raison de 8% Bi :

| | |
|---|---|
| % en masse de styrène | 60 |
| % en masse de diméthacrylate de 1,4-butanediyle | 20 |
| % en masse de triphénylbismuth | 20 |
| % en masse de bismuth | 8.18 |
| % en masse de PPO | 15 |
| % en masse de *N*-(2',5'-di-t-butylphényl)-4-butylamino-1,8-naphtalimide | 0,3 |
| % en masse de bis-*N*-(2',5'-di-t-butylphényl)-3,4,9,10-pérylènetétracarbodiimide | 0,02 |
| λ absorption (nm) | < 500 |
| λ max fluorescence (nm) | 580 |
| Temps de déclin (ns) | 6 |

Les teneurs sont données en référence au mélange des trois premiers composants ; le monomère et l'agent de réticulation sont ici présents en des quantités massiques dans un rapport 2/1, tandis que l'agent de réticulation a une teneur massique égale à celle du triphénylbismuth.

Des proportions similaires peuvent être mises en oeuvre pour un mélange de vinyltoluène (ou de vinylxylène) avec du diméthacrylate de 1,4-butanediyle (ou d'un autre diméthacrylate ayant une chaine centrale comportant de 1 à 12 atomes de carbone), ou avec du divinylbenzène comme agent de réticulation, en aboutissant à des résultats satisfaisants.

De manière préférée, le scintillateur de l'invention présente un maximum d'émission vers des longueurs d'onde supérieures à 570 nm. A titre d'exemple, les composés fluorescents incorporés dans les scintillateurs étudiés sont des dérivés des 1,8-naphtalimides, des pérylènecarbodiimides et du Nile Red.

Dans une version simplifiée de l'invention, il est possible de préparer des scintillateurs fluoresçant dans n'importe quelle gamme de longueur d'onde du visible.

A titre d'exemple, pour réaliser un scintillateur au bismuth défini ci-dessus, on mélange du diméthacrylate de 1,4-butanediyle pur, du styrène pur, du triphénylbismuth, du *N*-(2',5'-di-*t*-butylphényl)-4-butylamino-1,8-naphtalimide, du bis-*N*-(2',5'-di-*t*-butylphényl)-3,4,9,10-pérylènetétracarbodiimide et du 2,5-diphényloxazole sous atmosphère inerte dans un flacon sec. Le mélange est libéré de tout gaz par la méthode dite du "freeze-pump-thaw", puis il est versé avec précaution dans un moule aux dimensions de la matrice de capillaires qui donnera la forme finale du scintillateur.

La matrice de capillaires, de quelques dizaines de micromètres de diamètre interne (au plus 20, voire 10 micromètres), est alors introduite dans le moule de sorte que le liquide entre en force dans les espaces laissés libres de la matrice de verre sur une longueur de quelques centimètres.

La préparation du mélange, son introduction dans le moule puis l'introduction de la matrice de capillaires sont réalisées à la température ambiante, température à laquelle une bonne solubilisation des divers constituants du mélange est assurée.

Après un cycle thermique adapté à la mise en forme du scintillateur et qui permet à tous les monomères de polymériser, le produit est démoulé puis poli jusqu'à obtenir un état de surface optiquement compatible avec les applications d'imagerie. Les dimensions du scintillateur sont, par exemple, de 40 mm de longueur et de largeur (perpendiculairement à la longueur des capillaires) et de 5 mm d'épaisseur (parallèlement à ces capillaires). La longueur d'émission principale est de 580 nm.

**Références**

[1] M. Hamel, S. Darbon, S. Normand, G. Turk, WO2012085004, 2012
[2] L. Disdier, A. Fedotoff, WO03081279, 2003
[3] E. Bigler, F. Ploack, Applied Optics, Vol.24, N°7, 994-997
[4] W. Koechner, US4788436, 1988

[5] Pichat, L., Pesteil, P., Clément, J. J., Chim. Phys. 1953, 50, 26-41

[6] M. Hamel, G. Turk, A. Rousseau, S. Darbon, C. Reverdin, S. Normand, Nucl. Instr. and Meth.A 660 (2011) 57-63

[7] Lin, Q.; Yang, B.; Li, J.; Meng, X.; Shen, J. Polymer2000, 41, 8305-8309

[8] Hamel, M.; Normand, S.; Simic, V. WO2009095376, 2009

[9] Hao Liang, Fang Xie, Min Liu, Zhen Jin, FushengLuo, Zongyong, Spectrochim. Acta A 71 (2008) 588

[10] (a) V. Nagarkar, I. Sheshtakova, L. Ovechkina, US7372041, 2008; (b) Riley, K. J.; Ovechkina, L.; Palamakumbura, S.; Bell, Z.; Miller, S.; Nagarkar, V. V. IEEE Nucl. Sci. Symp. Conf. Rec. 2010, 1777-1780.

[11] C. Fourment et al., R.S.I. 80, 083505, 2009

[12] Disdier, L., Lerche, R.A., Bourgade, J.L., Glebov, V.Yu., R.S.I. 75, 6, 2004

[13] US - 4 495 084

[14] EP - 0 913 448

[15] WO - 2014/135640

## Revendications

1. Scintillateur pour l'imagerie utilisant des rayonnements X ou Gamma ou des particules chargées, comportant un réseau de capillaires (1) en verre de diamètre interne au plus égal à 500 micromètres, **caractérisé en ce que** ces capillaires sont remplis d'un matériau polymère formé d'au moins (i) un monomère choisi dans le groupe constitué par le vinyltoluène, le styrène et le vinylxylène et leurs isomères, (ii) d'un agent de réticulation constitué par un diméthacrylate possédant une chaine centrale comportant de 1 à 12 atomes de carbone ou par du divinylbenzène, et (iii) de triphénylbismuth, l'agent de réticulation étant présent dans une proportion massique de 10% à 60% de son mélange avec le monomère et le triphénylbismuth étant présent à au moins 5% en poids, l'agent de réticulation étant présent dans une proportion de 0.75 à 1.25 fois la teneur massique du triphénylbismuth.

2. Scintillateur selon la revendication 1, dont l'agent de réticulation est du divinylbenzène.

3. Scintillateur selon la revendication 1, dont l'agent de réticulation est du diméthacrylate de 1,4-butanediyle.

4. Scintillateur selon l'une quelconque des revendications 1 à 3, dont le matériau comporte le monomère et l'agent de réticulation dans des quantités massiques dont le rapport est compris entre 2 et 4.

5. Scintillateur selon la revendication 4, dont le monomère et l'agent de réticulation sont dans des quantités massiques dont le rapport est compris entre 2.9 et 3.1.

6. Scintillateur selon l'une quelconque des revendications 1 à 5, dont l'agent de réticulation et le triphénylbismuth sont dans des quantités massiques dont le rapport est compris entre 0.9 et 1.1.

7. Scintillateur selon l'une quelconque des revendications 1 à 6, dont le matériau comporte l'élément Bi à au moins 8% en poids.

8. Scintillateur selon l'une quelconque des revendications 1 à 7, dont le matériau comporte en outre au moins un fluorophore capable de générer de la lumière dans le spectre visible.

9. Scintillateur selon l'une quelconque des revendications 1 à 8, dont une face destinée à être mise en regard d'un rayonnement X ou Gamma ou de particules chargées est munie d'un revêtement réfléchissant (3) adapté à renvoyer de la lumière vers l'autre face.

10. Scintillateur selon l'une quelconque des revendications 1 à 9, dont une face destinée à être mise en regard d'un rayonnement X ou Gamma ou de particules chargées est munie d'un revêtement diffusant (5) adapté à renvoyer de la lumière vers l'autre face.

11. Scintillateur selon la revendication 9 ou la revendication 10, dont les capillaires sont revêtus intérieurement d'un matériau réfléchissant (4).

12. Scintillateur selon l'une quelconque des revendications 1 à 11, dont les capillaires ont un diamètre interne au plus égal à 20 micromètres.

**Patentansprüche**

1. Szintillator zur Bildgebung unter Verwendung von Röntgen- bzw. Gammastrahlungen oder geladenen Teilchen, enthaltend ein Netz von Kapillaren (1) aus Glas mit einem Innendurchmesser von höchstens gleich 500 μm, **dadurch gekennzeichnet, dass**
diese Kapillaren mit einem Polymermaterial gefüllt sind, das zumindest gebildet aus (i) einem Monomer, ausgewählt aus der Gruppe umfassend Vinyltoluol, Styrol und Vinylxylol und deren Isomeren, (ii) einem Vernetzungsmittel, bestehend aus einem Dimethacrylat, das eine Zentralkette mit zwischen 1 und 12 Kohlenstoffatomen besitzt, oder aus Divinylbenzol, und (iii) Triphenylwismuth, wobei das Vernetzungsmittel in einem Massenanteil von 10 % bis 60% seines Gemischs mit dem Monomer vorliegt und das Triphenylwismuth mit zumindest 5 Gew.-% vorliegt, wobei das Vernetzungsmittel in einem Anteil vom 0,75- bis 1,25-fachen des Massengehalts an Triphenylwismuth vorliegt.

2. Szintillator nach Anspruch 1, wobei dessen Vernetzungsmittel Divinylbenzol ist.

3. Szintillator nach Anspruch 1, wobei dessen Vernetzungsmittel 1,4-Butandiyldimethacrylat ist.

4. Szintillator nach einem der Ansprüche 1 bis 3, wobei dessen Material das Monomer und das Vernetzungsmittel in Massenmengen enthält, deren Verhältnis zwischen 2 und 4 liegt.

5. Szintillator nach Anspruch 4, wobei dessen Monomer und Vernetzungsmittel in Massenmengen vorliegen, deren Verhältnis zwischen 2,9 und 3,1 liegt.

6. Szintillator nach einem der Ansprüche 1 bis 5, wobei dessen Vernetzungsmittel und das Triphenylbismuth in Massenmengen vorliegen, deren Verhältnis zwischen 0,9 und 1,1 liegt.

7. Szintillator nach einem der Ansprüche 1 bis 6, wobei dessen Material das Element Bi mit zumindest 8 Gew.-% enthält.

8. Szintillator nach einem der Ansprüche 1 bis 7, wobei dessen Material ferner zumindest einen Fluorophor enthält, der Licht im sichtbaren Spektrum erzeugen kann.

9. Szintillator nach einem der Ansprüche 1 bis 8, wobei dessen Seite, die einer Röntgen- bzw. Gammastrahlung oder geladenen Teilchen gegenübergestellt werden soll, mit einer reflektierenden Beschichtung (3) versehen ist, die dazu geeignet ist, das Licht auf die andere Seite umzulenken.

10. Szintillator nach einem der Ansprüche 1 bis 9, wobei dessen Seite, die einer Röntgen- bzw. Gammastrahlung oder geladenen Teilchen gegenübergestellt werden soll, mit einer lichtstreuenden Beschichtung (5) versehen ist, die dazu geeignet ist, das Licht auf die andere Seite umzulenken.

11. Szintillator nach Anspruch 9 oder Anspruch 10, wobei dessen Kapillare innen mit einem reflektierenden Material (4) beschichtet sind.

12. Szintillator nach einem der Ansprüche 1 bis 11, wobei dessen Kapillare einen Innendurchmesser von höchstens gleich 20 μm haben.

**Claims**

1. A scintillator for imaging using X-rays or gamma-rays or charged particles, comprising a network of glass capillaries (1) having an inner diameter at most equal to 500 micrometers, **characterized in that** these capillaries are filled with a polymer material formed from at least (i) a monomer selected from the group constituted by vinyltoluene, styrene and vinylxylene and their isomers, (ii) a cross-linking agent constituted by a dimethacrylate having a central chain comprising from 1 to 12 carbon atoms or by divinylbenzene, and (iii) triphenylbismuth, the cross-linking agent being present in a percentage by weight from 10% to 60% of its mixture with the monomer and the triphenylbismuth being present at 5% by weight at least, the cross-linking agent being present in a proportion of 0.75 to 1.25 times the content by weight of triphenylbismuth.

2. A scintillator according to claim 1, of which the cross-linking agent is divinylbenzene.

3. A scintillator according to claim 1, of which the cross-linking agent is 1,4 butanediyl dimethacrylate.

4. A scintillator according to any one of claims 1 to 3, of which the material comprises the monomer and the cross-linking agent in quantities by weight the ratio of which is comprised between 2 and 4.

5. A scintillator according to claim 4, of which the monomer and the cross-linking agent are in quantities by weight the ratio of which is comprised between 2.9 and 3.1.

6. A scintillator according to any one of claims 1 to 5, of which the cross-linking agent and the triphenylbismuth are in quantities by weight the ratio of which is comprised between 0.9 and 1.1.

7. A scintillator according to any one of claims 1 to 6, of which the material comprises the element Bi at at least 8% by weight.

8. A scintillator according to any one of claims 1 to 7, of which the material further comprises at least one fluorophore capable of generating light in the visible spectrum.

9. A scintillator according to any one of claims 1 to 8, of which a face intended to be placed opposite an X- or gamma- or charged-particle ray is provided with a reflective coating (3) suitable for sending light towards the other face.

10. A scintillator according to any one of claims 1 to 9, of which a face intended to be placed opposite an X- or gamma- or charged-particle ray is provided with a scattering coating (5) suitable for sending light towards the other face.

11. A scintillator according to claim 9 or claim 10, of which the capillaries are coated internally with a reflective material (4).

12. A scintillator according to any one of claims 1 to 11, of which the capillaries have an inner diameter at most equal to 20 micrometers.

**Figure 1**

**Figure 2a**

**Figure 3a**

**Figure 2b**

**Figure 3b**

Figure 2c

Figure 3c

Figure 2d

Figure 3d

Figure 3e

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4495084 A
- FR 2511387
- EP 0913448 A
- WO 2014135640 A
- WO 03081279 A
- US 737204110 B
- EP 091344814 A

- WO 2012085004 A, M. Hamel, S. Darbon, S. Normand, G. Turk
- US 4788436 A, W. Koechner
- WO 2009095376 A, Hamel, M.; Normand, S.; Simic, V.
- US 7372041 B, V. Nagarkar, I. Sheshtakova, L. Ovechkina

**Littérature non-brevet citée dans la description**

- **E. BIGLER ; F. PLOACK.** *Applied Optics,* vol. 24 (7), 994-997
- **PICHAT, L. ; PESTEIL, P. ; CLÉMENT, J. J.** *Chim. Phys.,* 1953, vol. 50, 26-41
- **M. HAMEL ; G. TURK ; A. ROUSSEAU ; S. DARBON ; C. REVERDIN ; S. NORMAND.** *Nucl. Instr. and Meth.A,* 2011, vol. 660, 57-63
- **LIN, Q. ; YANG, B. ; LI, J. ; MENG, X. ; SHEN, J.** *Polymer,* 2000, vol. 41, 8305-8309

- **HAO LIANG ; FANG XIE ; MIN LIU ; ZHEN JIN ; FUSHENGLUO ; ZONGYONG.** *Spectrochim. Acta A,* 2008, vol. 71, 588
- **RILEY, K. J. ; OVECHKINA, L. ; PALAMAKUMBU-RA, S. ; BELL, Z. ; MILLER, S. ; NAGARKAR, V. V.** IEEE Nucl. Sci. Symp. Conf. Rec. 2010, 1777-1780
- **C. FOURMENT et al.** *R.S.I.,* 2009, vol. 80, 083505
- **DISDIER, L. ; LERCHE, R.A. ; BOURGADE, J.L. ; GLEBOV, V.YU.** *R.S.I.,* 2004, vol. 75, 6